# EUROPÄISCHE PATENTANMELDUNG

(11) **EP 2 357 356 A2**
(43) Veröffentlichungstag der Anmeldung: **17.08.2011**
(21) Anmeldenummer: 10015226.3
(22) Anmeldetag: 02.12.2010
(51) Int. Cl.: F03D 1/06, F03D 3/06, F03D 7/00

(54) **Rotorblatt für eine Windenergieanlage und Verfahren zur Dämpfung von Schwingungen eines Rotorblatts**

(30) Priorität: 01.02.2010 DE 102010006544
(71) Anmelder: Wölfel Beratende Ingenieure GmbH & Co. KG, 97204 Höchberg (DE)
(72) Erfinder: Katz, Sebastian, 97082 Würzburg (DE); Pankoke, Steffen, 97837 Erlenbach (DE); Wölfel, Horst Peter, 97204 Höchberg (DE); Dennert, Martin, 56321 Brey (DE)
(74) Vertreter: Knoblauch, Andreas

(57) **Zusammenfassung**

Die Erfindung betrifft ein Rotorblatt (1), insbesondere für eine Windenergieanlage, das mindestens einen Massenaktor (4) aufweist. Ferner betrifft die Erfindung ein Verfahren zur Dämpfung von Schwingungen eines derartigen Rotorblatts (1).

Für eine effektive Schwingungsdämpfung bei wenig Bauraum ist die Masse (6) des Massenaktors (4) in einer Pendelbewegung linear oder bogenförmig bewegbar.

## Beschreibung

Die Erfindung betrifft ein Rotorblatt, insbesondere für eine Windenergieanlage, das mindestens einen Massenaktor aufweist, der einen Aktor und eine Masse aufweist. Ferner betrifft die Erfindung ein Verfahren zur Dämpfung von Schwingungen eines derartigen Rotorblatts mit mindestens einem Massenaktor, der einen Aktor und eine Masse aufweist.

Rotorblätter können in an sich bekannter Weise an einem Ende einer drehbar gelagerten Nabe befestigt werden. Sie bilden dann einen Rotor mit mindestens einem Rotorblatt.

Rotoren werden beispielsweise bei Windenergieanlagen, Drehflüglern oder Schiffsantrieben eingesetzt. Bei Windenergieanlagen werden üblicherweise Rotoren mit ein bis vier Rotorblättern verwendet. Die Rotorblätter der Rotoren werden durch ein Medium wie beispielsweise Luft oder Wasser umströmt. Der Rotor kann dabei im motorischen oder im generatorischen Betrieb eingesetzt werden, d.h., dass er entweder angetrieben wird oder beispielsweise einen Generator zur Stromerzeugung antreibt. Die Rotorblätter werden statischen und dynamischen Kräften ausgesetzt, die zu Schwingungen in den Rotorblättern führen. Diese Schwingungen werden auf die an den Rotor angrenzenden Strukturen, wie beispielsweise ein Getriebe, einen Generator oder einen Turm, auf dem der Rotor befestigt ist, übertragen.

Diese Schwingungen führen zu einer hohen Belastung der Rotorblätter und der weiteren Strukturen und damit zu einer verringerten Lebensdauer. Zusätzlich führen sie häufig zu Geräuschemissionen, die in der Regel unerwünscht sind.

Zur passiven Dämpfung von Schwingungen in einem Rotorblatt einer Windenergieanlage wird beispielsweise in WO 95/21327 vorgeschlagen, einen passiven Schwingungsdämpfer, der eine Masse, eine Feder und einen Dämpfer aufweist, im Bereich einer Flügelspitze eines Rotorblatts anzuordnen. Dieser passive Schwingungsdämpfer ist dabei derart angeordnet, dass Schwingungen in Drehrichtung des Rotors ausgeglichen werden können.

Aus WO 02/084114 A1 ist ein passiver Dämpfer für Rotorblätter einer Windenergieanlage bekannt, der als Flüssigkeitsdämpfer ausgebildet ist. Dabei befindet sich Flüssigkeit in einem U-förmigen Rohr im Bereich der Flügelspitze. Dieser Dämpfer dient ebenfalls zur Dämpfung von Schwingungen in Drehrichtung, der sogenannten Schwenkrichtung.

In DE 10 2006 022 266 A1 wird die Verwendung eines aktiven Schwingungsdämpfers vorgeschlagen, der u.a. im Turm oder im Rotorblatt angeordnet werden soll. Dieser Schwingungsdämpfer soll Schwingungen entgegenwirken, die senkrecht zur Drehrichtung des Rotors, also in der sogenannten Schlagrichtung, auftreten. Der aktive Schwingungsdämpfer weist dabei zwei gegenläufig um eine gemeinsame Drehachse rotierende Massen auf, wobei die Massen bezogen auf die Drehachse eine Unwucht aufweisen. Jede vollständige Drehung der Massen bewirkt dann genau einen Impuls, der zur Schwingungsdämpfung verwendet wird.

Während passive Systeme sehr genau auf eine Eigenfrequenz des Rotorblatts abgestimmt werden müssen und außerhalb dieser Eigenfrequenz nur eine geringe Wirkung entfalten, muss ein aktiver Schwingungsdämpfer, wie er in DE 10 2006 022 266 A1 offenbart ist, nicht genau auf eine Eigenfrequenz abgestimmt sein. Daher ist es möglich, mit einem aktiven Schwingungsdämpfer bzw. Massenaktor Schwingungen über einen relativ großen Frequenzbereich zu dämpfen. Gleichzeitig kann ein Massenaktor gegenüber einem passiven Schwingungsdämpfer mit einer geringeren Masse auskommen. Eine geringe Masse ist für den Einsatz in Rotorblättern besonders vorteilhaft, da die Massen in den Rotorblättern relativ hohen Kräften ausgesetzt sind. Um auch bei geringen Massen eine relativ gute Schwingungsdämpfung zu erreichen, ist ein relativ großer Verstellweg notwendig. Insbesondere innerhalb der Rotorblätter steht aber nicht viel Platz zur Verfügung.

In DE 10 2006 022 266 A1 wird ein relativ großer Verstellweg dadurch erreicht, dass die Massen um eine Drehachse rotieren. Bei einer derartigen Ausbildung ist aber nicht nur in der gewünschten Dämpfungsrichtung, sondern auch quer dazu ein freier Raum erforderlich. Dabei ist ein derartiges System relativ träge. Bei Schwingungen, die durch äußere Bedingungen, beispielsweise bei einem böigen Wind, hervorgerufen werden, ist daher keine effektive Schwingungsdämpfung erreichbar.

Der Erfindung liegt nun die Aufgabe zugrunde, eine reaktionsschnelle Schwingungsdämpfung bei geringem Bauraumbedarf zu erreichen.

Erfindungsgemäß wird diese Aufgabe bei einem Rotorblatt der eingangs genannten Art dadurch gelöst, dass die Masse in einer Pendelbewegung linear oder bogenförmig bewegbar ist.

Die Masse wird dabei durch den Aktor bewegt. Eine Pendelbewegung ist eine Hin- und Herbewegung entlang einer vorbestimmten Strecke, wobei die Entfernung zwischen zwei Endpunkten gegebenenfalls veränderbar sein kann. Unter einer bogenförmigen Bewegung ist eine quasi lineare Bewegung zu verstehen, also die Bewegung auf einem Kreissegment mit sehr großem Radius. Die Bewegung der Masse erfolgt also im Wesentlichen oder genau auf einer Linie, so dass seitlich neben der Masse nicht viel Bauraum zur Verfügung stehen muss. Der in Bewegungsrichtung vorhandene Bauraum kann dabei optimal ausgenutzt werden. Gleichzeitig ist relativ schnell eine Änderung der Bewegungsfrequenz und/oder der Schwingungsamplitude erreichbar. Je nach Ausrichtung des Massenaktors kann dabei gezielt eine Schwingung des Rotorblatts in einer bestimmten Richtung gedämpft werden, wobei durch das Zusammenwirken mehrerer Massenaktoren auch Schwingungen in Mischrichtungen gedämpft werden können. Dabei ist nicht nur die Frequenz der Bewegung der Masse, sondern auch die Amplitude einstellbar. Dementsprechend kann eine gute und reaktionsschnelle Schwingungsdämpfung erfolgen.

Dabei ist besonders bevorzugt, dass dem Massenaktor ein Sensor zugeordnet ist, der Schwingungen des Rotorblatts erfasst, wobei ein Regler vorgesehen ist, der auf Grundlage von Signalen des Sensors ein Steuersignal für den Massenaktor ausgibt. Die beim Betrieb auftretenden Schwingungen am Rotorblatt werden also mit mindestens einem Sensor erfasst und in Form von Schwingungssignalen an einen Regler übergeben. Der Regler bestimmt auf Grundlage dieser Schwingungssignale ein Steuersignal für den Massenaktor, dessen Aktor daraufhin eine Bewegung der Masse bewirkt, so dass das Rotorblatt mit einer der Schwingung entgegenwirkenden Kraft beaufschlagt wird. Als Sensor kann beispielsweise ein Schwingungssensor, ein Beschleunigungssensor, ein Dehnungssensor, ein Geschwindigkeitssensor oder ein Wegsensor eingesetzt werden. Dabei ist eine Anordnung des Sensors in der Nähe des Massenaktors vorteilhaft, da dann mit kurzen Übertragungswegen ausgekommen werden kann. Die Gefahr von Störungen wird dadurch gering gehalten.

Vorzugsweise ist der Aktor als elektrisch, pneumatisch oder hydraulisch arbeitender Aktor ausgebildet. Der Aktor kann dann mit relativ geringer Energie auskommen und genau angesteuert werden. Der Aktor ist dabei günstigenfalls als Linearantrieb ausgebildet.

Vorteilhafterweise sind Parameter des Reglers von der Rotationsgeschwindigkeit, der Anströmgeschwindigkeit und/oder einem Anströmwinkel abhängig. Die Reglerparameter werden also durch äußere Einflüsse beeinflusst. Dabei kann bei einer entsprechenden Programmierung des Reglers sich die Regelung im Betrieb in optimaler Weise selbständig einstellen.

Bevorzugterweise ist der Massenaktor mit dem Sensor und dem Regler als selbständig handhabbare Einheit ausgebildet. Dadurch können insbesondere bereits fertig gestellte Rotorblätter relativ leicht mit einer aktiven Schwingungsdämpfung ausgestattet werden. Durch die Ausbildung des Massenaktors als selbständige Einheit zusammen mit dem Sensor und dem Regler kann eine sichere Verdrahtung zwischen dem Massenaktor, dem Sensor und dem Regler bei kurzen Übertragungswegen gewährleistet werden. Dadurch ergibt sich eine sehr geringe Störanfälligkeit.

Vorteilhafterweise weist das Rotorblatt mehrere Massenaktoren auf, wobei insbesondere mindestens ein Massenaktor versetzt zu einer Längsachse des Rotorblatts angeordnet ist. Durch die Verwendung mehrerer Massenaktoren kann die Belastung des Rotorblatts auf eine größere Fläche verteilt werden. Dadurch ist es möglich, insgesamt eine etwas größere Masse zur Schwingungsdämpfung einzusetzen. Da bei einem Ausfall eines Massenaktors die weiteren Massenaktoren betriebsbereit bleiben, erfolgt auch dann eine weitere Schwingungsdämpfung. Dadurch ergibt sich eine erhöhte Betriebssicherheit. Bei der Anordnung mindestens eines Massenaktors versetzt zu einer Längsachse des Rotorblatts können auch Torsionsschwingungen gedämpft werden. Auch wenn alle Massenaktoren derart angeordnet sind, dass sie eine Schwingungsdämpfung in Schlagrichtung, also senkrecht zur Drehbewegung des Rotors, dämpfen, kann zusätzlich eine Torsionsschwingung beeinflusst werden. Bei mehrteiligen Rotorblättern ist es dabei vorteilhaft, dass in jedem Teil des Rotorblatts mindestens ein Massenaktor angeordnet ist.

Dabei ist besonders bevorzugt, dass der Massenaktor an einer tragenden Struktur des Rotorblatts angeordnet ist. Eine derartige tragende Struktur ist beispielsweise ein Korpus innerhalb des Rotorblattes oder wird durch lastaufnehmende Riemen gebildet.

Alternativ ist bevorzugt, dass der Massenaktor an mindestens einer Mantelfläche des Rotorblatts befestigt ist, insbesondere an zwei gegenüberliegenden Mantelflächen. Bei einer Befestigung des Massenaktors an zwei gegenüberliegenden Mantelflächen ist der Massenaktor im Inneren des Rotorblatts angeordnet. Durch den Massenaktor erfolgt dann keine Störung der angeströmten Fläche. Die durch den Massenaktor zur Schwingungsdämpfung aufgebrachte Kraft kann zum Beispiel dabei direkt in die Mantelfläche und damit in das Rotorblatt eingeleitet werden. Eine derartige Ausgestaltung ist insbesondere bei der Verwendung einer Vielzahl von Massenaktoren günstig, da dann durch einen einzelnen Massenaktor nur relativ geringe Kräfte in die Mantelfläche eingebracht werden. Bei der Verwendung weniger Massenaktoren und entsprechend großer Massen bzw. großer Verstellwege ist dagegen eine Krafteinleitung in die tragende Struktur des Rotorblatts vorteilhafter. Auch dabei kann der Massenaktor außerhalb oder innerhalb des Rotorblatts angeordnet werden.

Bevorzugterweise ist mindestens einer der Massenaktoren im Bereich einer Spitze des Rotorblatts angeordnet. Im Bereich der Spitze sind die Amplituden der Schwingungen am größten. Dementsprechend wirkt in diesem Bereich eine aktive Dämpfung am effektivsten. Die Spitze ist dabei das Ende des Rotorblatts, das dem Ende gegenüberliegt, das zur Befestigung des Rotorblatts am Rotor dient.

In einer bevorzugten Ausführungsform ist der Massenaktor in einem Anbauelement angeordnet, das am Rotorblatt, insbesondere an der Spitze des Rotorblatts, angeordnet ist. Derartige Anbauelemente sind beispielsweise unter dem Namen Winglets bekannt. Sie dienen üblicherweise zur Verbesserung der Anströmung oder/und um ein Flattern der Rotorblätter zu vermeiden. Bei einer Anordnung des Massenaktors in einem derartigen Anbauelement steht für den Massenaktor relativ viel Bauraum zur Verfügung, so dass die Masse des Massenaktors über einen relativ großen Weg bewegt werden kann. Dadurch ist eine effektive Schwingungsdämpfung auch bei relativ geringer Masse des Massenaktors möglich. Gleichzeitig stellt die Verwendung eines Anbauelements eine relativ einfache Möglichkeit zum Nachrüsten von Rotorblättern mit einem Massenaktor dar.

Vorzugsweise weist der Massenaktor mindestens eine Feder auf, wobei der Massenaktor gegebenenfalls mit seiner Resonanzfrequenz auf eine Eigenfrequenz des Rotorblatts abgestimmt ist oder eine Resonanzfrequenz unterhalb der Eigenfrequenz des Rotorblatts aufweist. Durch eine Feder ist eine relativ einfache Führung der Masse möglich. Dabei kann bei einer Abstimmung auf eine Eigenfrequenz des Rotorblatts eine Schwingungsdämpfung auch bei einem möglichen Ausfall des Aktors erfolgen. Bei einer Abstimmung des Massenaktors auf eine Resonanzfrequenz unterhalb der Eigenfrequenz des Rotorblatts ist hingegen eine einfachere Reglerauslegung möglich.

Dabei ist besonders bevorzugt, dass der Massenaktor einen Dämpfer aufweist. Durch den Dämpfer kann Bewegungsenergie in dissipative Energie, insbesondere in Wärme, umgesetzt werden. Der Dämpfer stellt dabei ein passives Bauteil dar, das die Schwingungsdämpfung des Massenaktors verstärkt. Gegebenenfalls kann auch zusätzlich zu den Massenaktoren mindestens ein passiver Schwingungsdämpfer verwendet werden.

Vorzugsweise weist der Massenaktor einen Energiewandler auf, der eine Antriebsenergie für den Aktor bereitstellt. Der Energiewandler kann dabei beispielsweise die Antriebsenergie für den Aktor aus der Bewegung des Rotorblatts und der Schwerkraft gewinnen. Es ist auch denkbar, dass der Energiewandler beispielsweise auf der Außenseite der Mantelfläche des Rotorblatts angeordnet ist und als Solarzelle ausgebildet ist. Dabei ist besonders vorteilhaft, wenn der Energiewandler nicht nur die Antriebsenergie für den Aktor bereitstellt, sondern auch den Regler und den Sensor mit Energie versorgt. Dadurch wird eine autonom arbeitende Einheit erhalten, die wartungsarm ist.

Vorzugsweise weist das Rotorblatt dabei einen Blitzschutz auf, der insbesondere den oder die Massenaktoren bei Blitzeinschlag schützt. Dabei soll der Blitzschutz die Massenaktoren nicht nur vor einer Überspannung schützen, sondern auch vor einem möglichen elektromagnetischen Feld.

Bevorzugterweise ist die Masse bei nicht schwingendem Rotorblatt in einer mittleren, neutralen Lage gehalten. Dies kann beispielsweise mit Hilfe von Federn oder durch eine entsprechende Ansteuerung des Aktors erreicht werden. Der Einfluss der Masse bei nicht schwingendem Rotorblatt auf die Bewegung des Rotorblatts ist dadurch gering.

Vorzugsweise beträgt die Summe aller Massen der Massenaktoren je Rotorblatt etwa 0,5 bis 3 %, insbesondere 1 bis 2 % der Gesamtmasse des Rotorblatts. Mit einem derartigen Masseverhältnis lässt sich eine sehr effektive Schwingungsdämpfung erreichen, ohne die Gesamtmasse des Systems unzulässig zu erhöhen.

Vorzugsweise ist die Masse an einem Ende eines Hebelarms angeordnet, der in der neutralen Lage parallel zur Längsachse des Rotorblatts verläuft. Der Hebelarm kann dabei zur Übertragung einer Stellbewegung des Aktors auf die Masse dienen, wobei eine relativ geringe Stellbewegung des Aktors eine relativ große Bewegung der Masse bewirkt. Gleichzeitig ist es dadurch möglich, den Aktor in besser zugänglichen Bereichen anzuordnen, wobei gleichzeitig für die Bewegung der Masse mehr Raum zur Verfügung steht. Durch die Ausrichtung des Hebelarms parallel zur Längsachse des Rotorblatts wird die Masse durch die wirkenden Zentrifugalkräfte bei nicht schwingendem Rotorblatt automatisch in der neutralen Lage gehalten. Zusätzliche Federn oder eine entsprechende Ansteuerung des Aktors ist dann dafür nicht erforderlich.

Vorzugsweise ist der Hebelarm am anderen Ende über ein stoffschlüssiges Gelenk im Rotorblatt schwenkbar gelagert oder als Blattfeder ausgebildet. Ein stoffschlüssiges Gelenk wie auch eine Blattfeder sind reibungsarme und wartungsfreie Koppelelemente, durch die eine Bewegung übertragen werden kann. Dabei ist eine relativ leichte Ausführung möglich.

Vorzugsweise ist eine Überwachungsvorrichtung vorgesehen, die die Signale der Sensoren erfasst und insbesondere eine Testanregung der Aktoren durchführen kann. Die Überwachungsvorrichtung sammelt also die Signale der Sensoren und kann so beispielsweise den Betriebszustand jedes Sensors überwachen. Anhand der Signale der Sensoren ist auch das Aufzeichnen einer Lasthistorie möglich. Ferner können die Signale der Sensoren für einen Eingriff in eine Anlagensteuerung genutzt werden, insbesondere für eine aktive, individuelle Pitch-Regelung, also eine Regelung des Anströmwinkels durch Verdrehen der Rotorblätter um ihre Längsachse. Durch das Anregen einer Testanregung der Aktoren kann bei einer entsprechenden Signalauswertung der Sensoren durch die Überwachungseinrichtung auch die ordnungsgemäße Funktion der Aktoren überwacht werden. Für die Überwachungsvorrichtung können auch zusätzliche Sensoren vorgesehen sein, die unabhängig von den Massenaktoren sind. Die Überwachungsvorrichtung kann in einem Rotorblatt oder in einer tragenden Struktur, beispielsweise dem Turm einer Windenergieanlage, angeordnet sein. Eine Signalübertragung kann dabei über kabelgeführte oder kabellose Verbindungen erfolgen.

Dabei ist besonders bevorzugt, dass die Überwachungsvorrichtung eine Antwort des Rotorblatts auf die Testanregung der Aktoren mit einer Referenzantwort vergleicht. Anhand dieses Vergleichs ist eine Fehlererkennung von Strukturfehlern im Rotorblatt möglich. So führt beispielsweise eine Strükturschädigung zu einer Änderung der Schwingungsfrequenz und damit der Antwort des Rotorblatts.

Erfindungsgemäß wird die oben genannte Aufgabe durch ein Verfahren der eingangs genannten Art dadurch gelöst, dass die Masse in einer pendelförmigen Bewegung mit einer steuerbaren Frequenz bewegt wird.

Dabei erfolgt die Bewegung der Masse im Wesentlichen linear, also entweder exakt linear oder auf einem Kreisbogen mit einem sehr großen Durchmesser. Prinzipiell ist dabei eine Bewegung im Verhältnis zum Rotorblatt in jeder Richtung möglich, so dass Schwingungen gedämpft werden können, die senkrecht zur Drehrichtung, also in Schlagrichtung, oder auch parallel zur Drehrichtung, also in Schwenkrichtung, auftreten. Bevorzugt ist aber ein Einsatz zur Dämpfung von Schwingungen, die senkrecht zur Drehrichtung auftreten. Dementsprechend erfolgt eine Bewegung der Masse im Wesentlichen senkrecht zur Drehrichtung. Durch die pendelförmige Bewegung kann eine Frequenz und Amplitude der Schwingungen der Masse schnell beeinflusst werden. In kurzer Zeit können so auftretende Schwingungen wirksam gedämpft werden.

Dabei werden vorzugsweise die Schwingungen des Rotorblatts mit mindestens einem Sensor erfasst, wobei ein Regler auf Grundlage von Signalen des Sensors eine Stellgröße für den Aktor ausgibt. Es erfolgt also eine aktive Regelung des Massenaktors auf Grundlage der Schwingungen des Rotorblatts. Damit ist eine effektive Schwingungsdämpfung möglich.

Bevorzugterweise wird eine Antwort des Rotorblatts auf eine Testanregung durch den Massenaktor mit einer Referenzantwort verglichen. Dadurch ist es möglich, möglicherweise auftretende Strukturfehler innerhalb des Rotorblatts zu erkennen. Die Referenzantwort wird beispielsweise bei fabrikneuem Rotorblatt aufgezeichnet und in einem Speicher hinterlegt. Dabei können zusätzliche Sensoren im Rotorblatt vorgesehen sein, um räumliche Informationen über den Ort des Fehlers zu erhalten.

Dabei ist besonders bevorzugt, dass die Testanregung zyklisch durchgeführt wird. Es ist damit eine lückenlose Überwachung des Rotorblatts möglich. Dabei kann eine Überwachung des Rotorblatts selbst im Betrieb erfolgen.

Vorzugsweise werden neben der Längsmittelachse des Rotorblatts angeordnete Massenaktoren derart angesteuert, dass eine Torsionsschwingung gedämpft wird. Neben den Schwingungen in Drehrichtung bzw. senkrecht zur Drehrichtung wird also auch eine möglicherweise auftretende Torsionsschwingung gedämpft. Dadurch ist für das Rotorblatt eine höhere Lebensdauer zu erwarten.

Die Erfindung wird im Folgenden anhand der beiliegenden Zeichnungen näher beschrieben. Hierin zeigen:
- Fig. 1.: einen Querschnitt durch ein Rotorblatt,
- Fig. 2: eine Seitenansicht auf ein Rotorblatt,
- Fig. 3: eine Draufsicht auf ein Rotorblatt,
- Fig. 4: eine Draufsicht auf ein mehrteiliges Rotorblatt,
- Fig. 5: einen Querschnitt durch ein Rotorblatt,
- Fig. 6: eine Draufsicht auf ein Rotorblatt mit Anbauelement,
- Fig. 7: eine Seitenansicht des Rotorblatts nach Fig. 6 und
- Fig. 8: ein Rotorblatt mit einem Massenaktor, der einen Hebelarm aufweist.

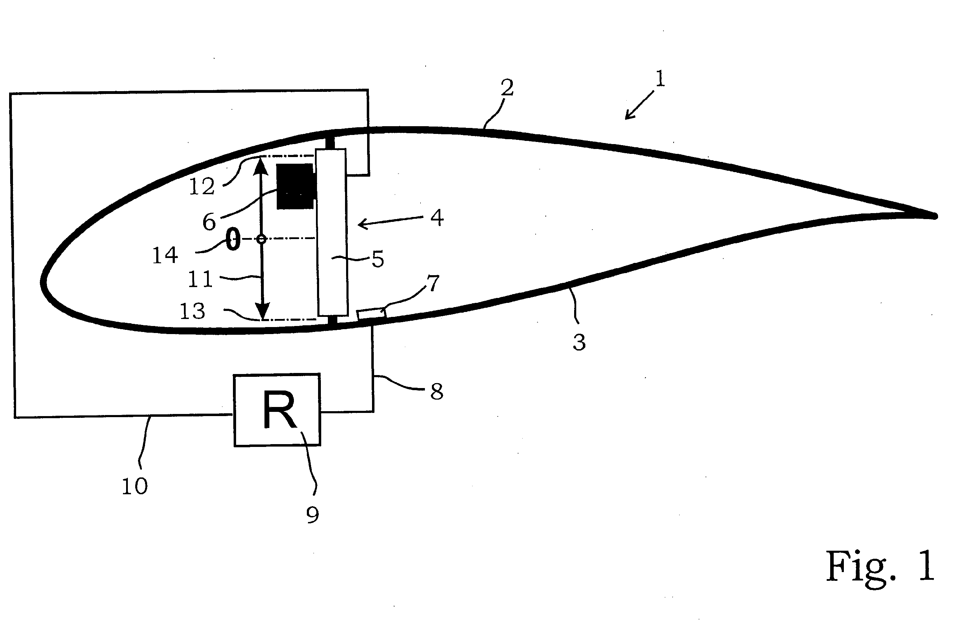

In Fig. 1 ist ein Rotorblatt 1 eines Rotors einer Windenergieanlage im Querschnitt dargestellt. Zwischen einer oberen Mantelfläche 2 und einer unteren Mantelfläche 3 ist ein Massenaktor 4 angeordnet, der einen Aktor 5 und eine linear bewegbare Masse 6 aufweist. Der Massenaktor 4 ist dabei mit einem Ende an einer Innenseite der oberen Mantelfläche 2 und mit einem anderen Ende an einer Innenseite der unteren Mantelfläche 3 befestigt. In der Nähe des Massenaktors 4 ist ein Sensor 7 an der Innenfläche der unteren Mantelfläche 3 angeordnet. Der Sensor 7 könnte genauso gut an der Innenfläche der oberen Mantelfläche 2 angeordnet sein. Der Sensor 7 ist dabei als Schwingungssensor ausgebildet. Die Signale des Sensors 7 entsprechen also Schwingungen des Rotorblatts 1.

Über eine Signalleitung 8 ist der Sensor 7 mit einem Regler 9 verbunden. Der Regler 9 berechnet aus den Signalen des Sensors 7 eine Stellgröße für den Aktor 5 des Massenaktors 4. Dabei ist der Regler 9 über eine weitere Leitung 10 mit dem Aktor 5 verbunden.

Der Regler 9 kann dabei äußere Einflüsse wie beispielsweise eine Anströmgeschwindigkeit oder einen Anströmwinkel bei der Berechnung der Stellgröße für den Aktor 5 berücksichtigen. Durch die räumlich nahe Anordnung des Reglers 9, des Sensors 7 und des Massenaktors 4 werden die erforderlichen Übertragungswege kurz gehalten. Auch wenn der Regler 9 in Fig. 1 außerhalb des Rotorblatts 1 angeordnet ist, wird der Regler 9 üblicherweise innerhalb des Rotorblatts 1 untergebracht. Dabei ist in der Regel jedem Massenaktor ein Regler und mindestens ein Sensor zugeordnet.

Die Bewegung der Masse 6 wird durch einen Doppelpfeil 11 dargestellt, wobei sich die Masse 6 in der dargestellten Position in der Nähe einer oberen Endlage 12 befindet. Im Bereich der unteren Mantelfläche 3 ist in entsprechender Weise eine untere Endlage 13 angeordnet. Zwischen den Endlagen 12, 13 befindet sich eine mittlere, neutrale Lage 14.

Der Weg zwischen der oberen Endlage 12 und der unteren Endlage 13 ist zusammen mit dem Gewicht der Masse 6 maßgeblich für die Stellkräfte, die auf das Rotorblatt 1 durch den Massenaktor 4 eingebracht werden können und die zur Schwingungsdämpfung dienen.

Der Massenaktor 4 ist dabei derart angeordnet, dass Schwingungen senkrecht zur Drehrichtung des Rotorblatts 1 gedämpft werden können.

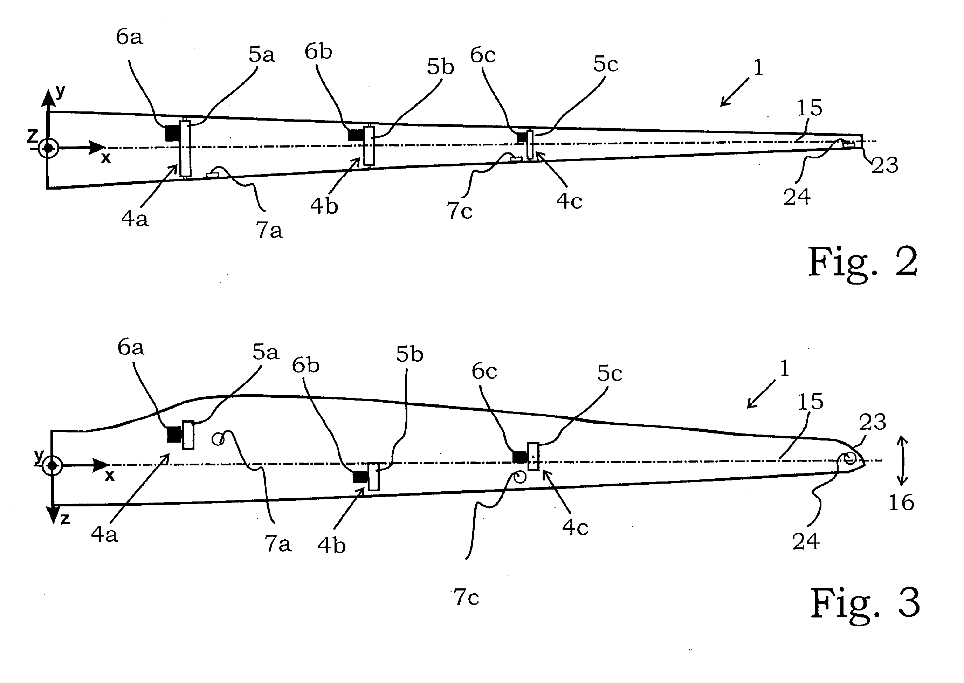

In Fig. 2 ist eine Draufsicht des Rotorblatts 1 dargestellt. Es ist zu erkennen, dass über eine Länge des Rotorblatts 1 eine Mehrzahl von Massenaktoren 4a, 4b, 4c angeordnet ist. Dadurch ist eine Verteilung der Massen 6a, 6b, 6c und der auf das Rotorblatt 1 ausgeübten Stellkräfte möglich. Insgesamt erfolgt so eine effektivere Schwingungsdämpfung. Gestrichelt dargestellt ist eine Längsachse 15 des Rotorblatts 1.

In Fig. 3 ist das Rotorblatt gemäß Fig. 2 um 90° gedreht dargestellt. Es ist zu erkennen, dass die Massenaktoren 4a, 4b, 4c gegenüber der Längsachse 15 versetzt angeordnet sind. Dadurch ist eine Dämpfung von Torsionsschwingungen möglich. Bei der Darstellung gemäß Fig. 3 erfolgt eine lineare Bewegung der Massen 6 senkrecht zur Zeichenebene und damit senkrecht zu einer Drehrichtung, die durch einen Pfeil 16 symbolisiert ist.

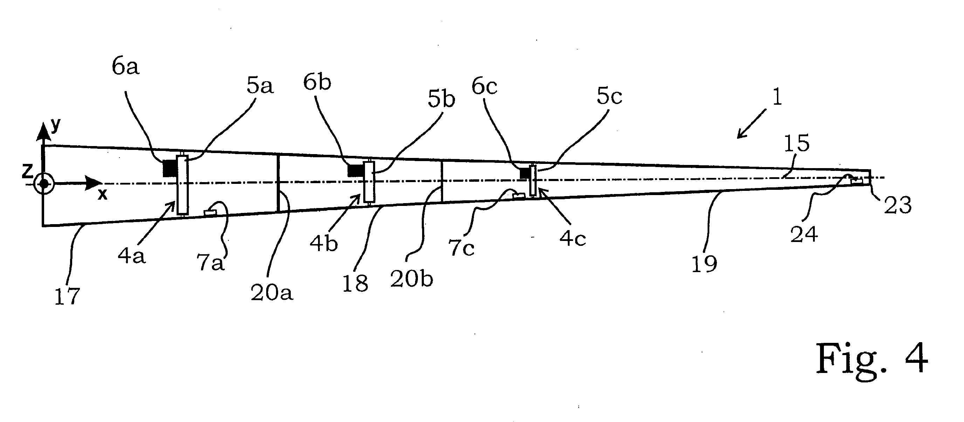

In Fig. 4 ist ein mehrteilig aufgebautes Rotorblatt 1 dargestellt, das insgesamt drei Teile 17, 18, 19 aufweist, wobei in jedem Teil jeweils ein Massenaktor 4a, 4b, 4c angeordnet ist. Es ist auch denkbar, mehr als einen Massenaktor 4 je Teil vorzusehen. Verbindungsstellen der Teile 17, 18, 19 sind mit 20a und 20b bezeichnet.

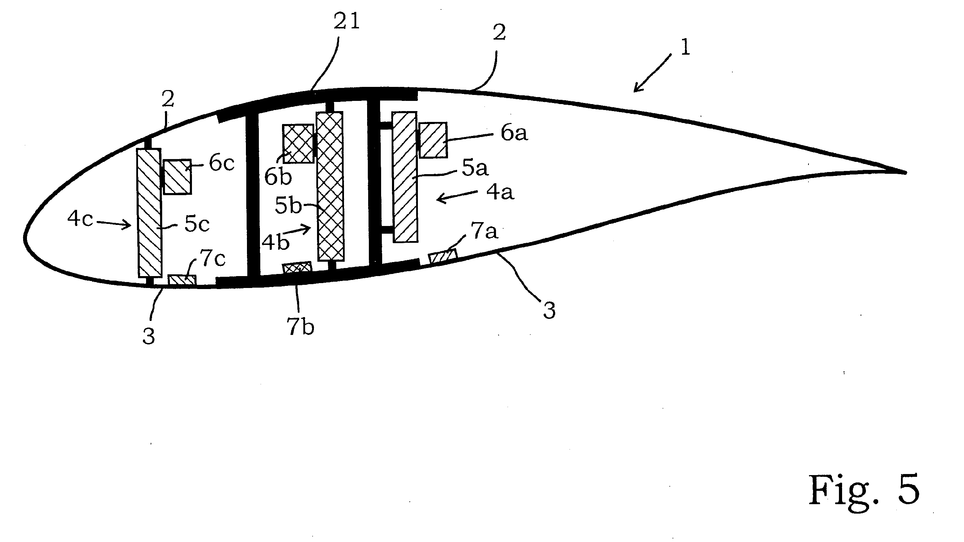

In Fig. 5 ist ein Rotorblatt 1 dargestellt, in dem verschiedene Einbaumöglichkeiten für die Massenaktoren 4a, 4b, 4c gezeigt sind. Die tragende Struktur ist als Kastenprofil 21 ausgebildet, wobei ein Massenaktor 4b innerhalb des Kastenprofils 21 befestigt ist. Dadurch können durch den Massenaktor 4b relativ große Kräfte aufgebracht werden. Ein Massenaktor 4a ist an einer Außenseite des Kastenprofils 21 angeordnet. Dadurch steht für eine Bewegung der Masse 6a mehr Platz zur Verfügung. Außerdem kann die Montage einfacher sein.

Ein weiterer Massenaktor 4c ist direkt an den Mantelflächen 2, 3 des Rotorblatts 1 befestigt. Damit kann eine Krafteinleitung genau an den Stellen erfolgen, die eine starke Schwingung aufweisen.

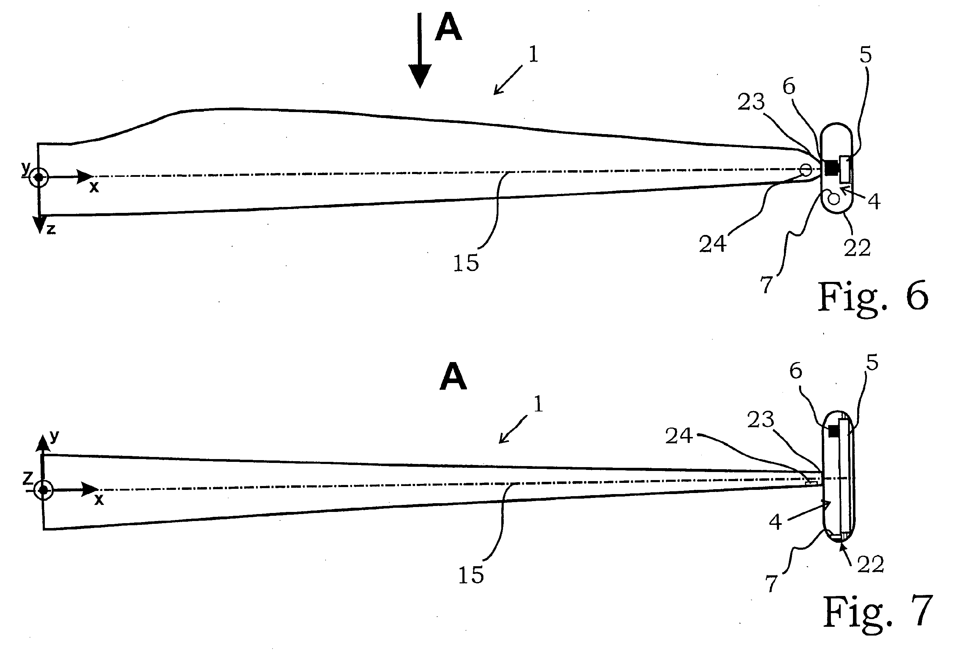

Fig. 6 zeigt ein Rotorblatt 1 mit einem Anbauelement 22 an einer Spitze 23 des Rotorblatts 1, wobei der Massenaktor 4 innerhalb des Anbauelements 22 angeordnet ist. Neben dem Massenaktor 4 ist auch der Sensor 7 und der nicht dargestellte Regler innerhalb des Anbauelements 22 angeordnet. Das Anbauelement 22 stellt damit eine selbständig handhabbare Einheit dar.

In Fig. 7, die das Rotorblatt 1 gemäß Fig. 6 um 90° gedreht zeigt, ist deutlich zu erkennen, dass für die Bewegung der Masse 6 relativ viel Raum zur Verfügung steht. Dadurch wird eine besonders effektive Schwingungsdämpfung begünstigt. Auch die Anordnung des Massenaktors 4 bzw. des Anbauelements 22 an der Spitze 23 des Rotorblatts 1 ist für eine effektive Schwingungsdämpfung sehr vorteilhaft, da im Bereich der Spitze 23 die größten Schwingungsamplituden auftreten. Es ist aber auch denkbar, dass das Anbauelement 22 an anderen Stellen des Rotorblatts 1 angeordnet wird, beispielsweise zwischen Teilen 17, 18, 19 bei einem mehrteiligen Rotorblatt.

In den Ausführungsbeispielen gemäß der Fig. 2 bis 4, 6 und 7 ist an der Spitze des Rotorblatts 1 ein zusätzlicher Sensor 24 angeordnet. Während den Massenaktoren jeweils ein Sensor 7 zugeordnet ist, ist der Sensor 24 nicht einem speziellen Massenaktor zugeordnet. Es ist denkbar, dass die Daten des zusätzlichen Sensors 24 allen Reglern der Massenaktor zur Verfügung gestellt werden. Der zusätzliche Sensor 24 kann auch mit einer nicht dargestellten Überwachungsvorrichtung verbunden sein.

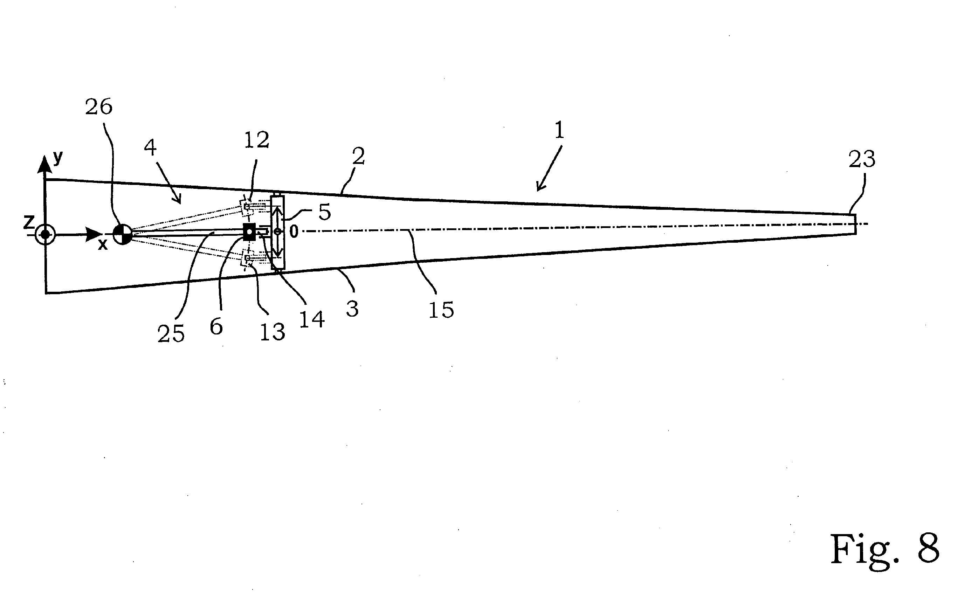

In Fig. 8 ist ein Ausführungsbeispiel dargestellt, wobei die Masse 6 an einem Schwenkarm 25 bogenförmig zwischen der oberen Endlage 12 und der unteren Endlage 13 in einer Pendelbewegung geführt ist. Die Endlagen 12, 13 sind gestrichelt dargestellt, während die neutrale Lage 14 mit durchgehenden Linien gezeichnet ist.

In der neutralen Lage 14 verläuft der Hebelarm 25 parallel zur Längsachse 15 des Rotorblatts 1. Bei einer rotatorischen Bewegung des Rotorblatts um eine Nabe wird die Masse 6 und damit der Hebelarm 25 durch die Zentrifugalkräfte in der neutralen Lage 14 gehalten, solange keine Ansteuerung des Aktors 5 erfolgt.

Der Hebelarm 25 ist über ein stoffschlüssiges Gelenk 26 mit dem Rotorblatt 1 verbunden. Anstelle des Gelenks kann auch vorgesehen sein, den Hebelarm als Blattfeder auszubilden, die an einem Ende fest eingespannt ist.

Der Aktor 5 ist in dem dargestellten Ausführungsbeispiel als Linearantrieb ausgebildet, der die Masse direkt antreibt. Es ist auch möglich, den Aktor 5 als Rotationsantrieb bzw. Schwenkantrieb auszubilden, der beispielsweise im Bereich des Gelenks 26 an den Hebelarm 25 angreift.

Insgesamt wird eine Schwingungsdämpfung erreicht, die sehr effizient und reaktionsschnell ist und einen weiten Anwendungsbereich erschließt.

## Patentansprüche

1. Rotorblatt, insbesondere für eine Windenergieanlage, das mindestens einen Massenaktor aufweist, der einen Aktor und eine Masse aufweist, **dadurch gekennzeichnet, dass** die Masse (6) in einer Pendelbewegung linear oder bogenförmig bewegbar ist.

2. Rotorblatt nach Anspruch 1, **dadurch gekennzeichnet, dass** der Massenaktor (4) mit einem Sensor (7) und einem Regler (9) als selbständig handhabbare Einheit ausgebildet ist.

3. Rotorblatt nach einem der Ansprüche 1 oder 2, **dadurch gekennzeichnet, dass** das Rotorblatt (1) mehrere Massenaktoren (4) aufweist, wobei insbesondere mindestens ein Massenaktor (4) versetzt zu einer Längsachse (15) des Rotorblatts (1) angeordnet ist.

4. Rotorblatt nach einem der Ansprüche 1 bis 3, **dadurch gekennzeichnet, dass** der Massenaktor (4) an einer tragenden Struktur (20, 21) des Rotorblatts (1) angeordnet ist.

5. Rotorblatt nach einem der Ansprüche 1 bis 3, **dadurch gekennzeichnet, dass** der Massenaktor (4) an mindestens einer Mantelfläche (2, 3) des Rotorblatts (1) befestigt ist, insbesondere an zwei gegenüberliegenden Mantelflächen (2, 3).

6. Rotorblatt nach einem der Ansprüche 1 bis 5, **dadurch gekennzeichnet, dass** mindestens einer der Massenaktoren (4) im Bereich einer Spitze (23) des Rotorblatts (1) angeordnet ist.

7. Rotorblatt nach einem der Ansprüche 1 bis 6, **dadurch gekennzeichnet, dass** die Summe aller Massen der Massenaktoren (4) je Rotorblatt (1) etwa 0,5 bis 3 %, insbesondere 1 bis 2 %, der Gesamtmasse des Rotorblatts (1) beträgt.

8. Rotorblatt nach einem der Ansprüche 1 bis 7, **dadurch gekennzeichnet, dass** die Masse (6) an einem Ende eines Hebelarms 25 angeordnet ist, der in einer neutralen Lage parallel zur Längsachse des Rotorblatts (1) verläuft.

9. Rotorblatt nach einem der Ansprüche 1 bis 8, **dadurch gekennzeichnet, dass** eine Überwachungsvorrichtung vorgesehen ist, die Signale der Sensoren (7) erfasst und insbesondere eine Testanregung der Aktoren (5) durchführen kann.

10. Verfahren zur Dämpfung von Schwingungen eines Rotorblatts gemäß einem der Ansprüche 1 bis 9 mit mindestens einem Massenaktor, der einen Aktor und eine Masse aufweist, **dadurch gekennzeichnet, dass** die Masse in einer pendelförmigen Bewegung mit einer steuerbaren Frequenz bewegt wird.

11. Verfahren nach Anspruch 10, **dadurch gekennzeichnet, dass** die Schwingungen des Rotorblatts mit mindestens einem Sensor erfasst werden, wobei ein Regler auf Grundlage von Signalen des Sensors eine Stellgröße für den Aktor ausgibt.

12. Verfahren nach einem der Ansprüche 10 oder 11, **dadurch gekennzeichnet, dass** eine Antwort des Rotorblatts auf eine Testanregung durch den Massenaktor mit einer Referenzantwort verglichen wird.
